# EUROPEAN PATENT APPLICATION

(11) **EP 4 435 242 A1**
(43) Date of publication of application: **25.09.2024**
(21) Application number: 23163613.5
(22) Date of filing: 23.03.2023
(51) Int. Cl.: F02B 25/02, F01N 3/20, F01N 9/00, F01N 11/00, F02B 43/10, F02B 47/06, F02D 19/06, F02D 41/14, F02M 21/02

(54) **INTERNAL COMBUSTION ENGINE**

(71) Applicant: Winterthur Gas & Diesel Ltd., 8401 Winterthur (CH)
(72) Inventor: Graziano, Barbara, 8406 Winterthur (CH)
(74) Representative: Hepp Wenger Ryffel AG

(57) **Abstract**

The present invention is directed to an internal combustion engine (100) having at least one cylinder (10), preferably a large vessel engine with at least one cylinder (10) having an inner diameter (11) of at least 200mm, and to a method for operating an internal combustion engine. A piston (12) is provided in said cylinder (10) for reciprocating between a bottom dead center and a top dead center. The internal combustion engine (100) has a scavenging port (13) formed in said cylinder (10) for supplying scavenging gas into a combustion chamber (14) that is a space enclosed by said cylinder (10) and an upper surface (15) of said piston (12). The internal combustion engine (100) has an exhaust port (16) formed in said cylinder (10) for exhausting gas out of said combustion chamber (14), the exhaust port (16) comprises an exhaust valve (17).

The internal combustion engine comprises at least one dosing unit (18, 18.1, 18.2, 18.3, 18.4) for ejecting a reducing agent, preferably liquid ammonia, into said combustion chamber (14), preferably at least one dosing unit (18) for each cylinder (10). The internal combustion engine (100) comprises a control unit (20) for controlling the dosing unit (18, 18.1, 18.2, 18.3, 18.4), adapted for ejecting a first amount (31) of the reducing agent into said combustion chamber (14) during expansion stroke during a time interval (32) that falls in a time window (33) from when the exhaust valve (17) opens until before supply of said scavenging gas through said scavenging port (13) into said combustion chamber (14) is started.

## Description

The present invention is directed to an internal combustion engine having at least one cylinder, preferably a large vessel engine with at least one cylinder having an inner diameter of at least 200mm, and to a method for operating an internal combustion engine.

The invention relates to the technical field of combustion engines and the reduction of their emissions.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which a main fuel is ignited with the help of a pilot injection of a self-igniting fuel or alternatively with the adoption of a pre-chamber solution.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), Biological Fuels (e. g. Oil made from algae), Hydrogen, Synthetic fuels from CO2 (e. g. made by Power-To-Gas or Power-To-Liquid).

In particular, the present invention is related to combustion engines which use ammonia as a fuel.

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, in particular ammonia, as well as in case of gaseous fuels, like LNG, LPG or others, being burned by the engine, the exhaust from this combustion process needs to be cleaned to comply with the existing rules such as IMO Tier III.

The IMO emission standards commonly referred to as Tier I ... III standards define the NOₓ emission standards for existing and new marine engines.

For large ships the emissions requirements have been increasing, in particular with regard to the nitrogen oxides emissions. Thus, there is a need to reduce the amount of nitrogen oxides in the exhaust gas emitted by the internal combustion engines of these ships.

SCR (selective catalytic reduction) technology is used to reduce the level of nitrogen oxides (NOₓ) in an exhaust gas of a combustion engine. SCR is commonly used in land based engines, e.g. heavy duty vehicles, industrial plants and other applications. SCR technology has also been used in marine environments in combination with two-stroke diesel engines. Due to regulatory requirements for said marine diesel engines and land based engines, there is an increased need for efficient SCR systems.

SCR may be based on the reduction of nitrogen oxides in an exhaust gas with ammonia (NH₃). Typically, ammonia is generated by injecting an ammonia precursor substance, such as a urea solution, into the exhaust gas of the combustion engine. Typically, the urea solution for example is sprayed via nozzles into the hot exhaust gas, where the liquid urea solution reacts to ammonia, carbon dioxide and water vapour. The ammonia then reduces the nitrogen oxides under the influence of a catalyst in an SCR reactor to nitrogen (N₂) and water (H₂O). The generation of ammonia from liquid urea is endothermic. Thus, decomposition of the urea solution is only complete and the nitrogen oxides (NOₓ) are only reduced to nitrogen (N₂), if the exhaust gas is sufficiently hot to activate the catalytic reactions.

EP3670878A1 discloses an internal combustion engine comprising a dosing unit for dosing a reductant, in particular comprising NH₃, into the cylinder, preferably at least one dosing unit for each cylinder. In the cylinder a so called selective non catalytic reduction (SNCR) may take place. If at all, only a small SCR catalyst is necessary. The engine has to be adapted to run with slow engine speed.

KR101648671B1 discloses an engine using ammonia fuel, wherein a preliminary amount of ammonia and a main amount of ammonia are injected for combustion and a small amount of ammonia is injected for post treatment. The post-treatment timing is chosen such that the temperature inside the cylinder is equal to or higher than a temperature (870 degrees to 1050 degrees) suitable for performing a catalyst-free reduction method.

EP2650521A1 discloses a two stroke engine comprising an ejection part for ejecting liquid ammonia into a combustion chamber. The ejection part serves as an ejection part for ejecting liquid ammonia into the combustion chamber causing combustion and for ejecting liquid ammonia for cooling the scavenging gas. Liquid ammonia for cooling the scavenging gas is injected within a period of time from when supply of the scavenging gas through the scavenging port into the combustion chamber is started until when the piston next reaches top dead center.

It is therefore an object of the present invention to prevent the drawbacks of the prior art and in particular to create an internal combustion engine and a method for reducing NOₓ emissions of an internal combustion engine ensuring reduced operational costs, a reduced size of the aftertreatment system, a minimized emission of side-reaction products, such as N₂O and SO₃ and/or a reduced dosing of a reducing agent, such as ammonia or an ammonia precursor substance.

The object is achieved by an internal combustion engine, a method for operating an internal combustion engine and a computer program product according to the independent claims.

The internal combustion engine has at least one cylinder having an inner diameter of at least 200mm. A piston is provided in said cylinder for reciprocating between a bottom dead center and a top dead center.

The internal combustion engine has a scavenging port formed in said cylinder for supplying scavenging gas into a combustion chamber that is a space enclosed by said cylinder and an upper surface of said piston.

The internal combustion engine may be a longitudinally-flushed two-stroke engine, wherein the scavenging gas is introduced at the bottom of the cylinder via scavenging slots into the combustion chamber of the cylinder, while the piston is in the vicinity of his bottom dead center and clears the path for the scavenging gas into the combustion chamber of the cylinder.

The internal combustion engine has an exhaust port formed in said cylinder, for example in the cylinder head, for exhausting gas out of said combustion chamber. The exhaust port comprises at least one exhaust valve.

The internal combustion engine comprises at least one dosing unit for ejecting a reducing agent into said combustion chamber, preferably at least one dosing unit for each cylinder.

The reducing agent or at least one of its derived substances acts as a reductant for reducing NOx form the exhaust gas.

The reducing agent preferably is a liquid ammonia. Alternatively, the reducing agent may comprise an ammonia precursor substance, for example urea.

The internal combustion engine comprises a control unit for controlling the dosing unit, which is adapted for ejecting a first amount of the reducing agent into said combustion chamber during expansion stroke, preferably during a time interval that falls in a time window from when the exhaust valve opens until before supply of said scavenging gas through said scavenging port into said combustion chamber is started.

Preferably, the time interval is shorter than the said time window.

During expansion stroke the piston is between the top dead center and the bottom dead center while moving in direction towards the bottom dead center.

Preferably, the controlling the dosing unit is adapted for ejecting a first amount of the reducing agent when the gas in the cylinder is already cooled down, preferably below 870°C. With these temperatures no SNCR will occur.

Preferably, the controlling the dosing unit is adapted for ejecting a first amount of the reducing agent before the scavenge port is open.

The timing of injection provides for the reducing agent to be exhausted, such that the reducing agent can be used as reductant downstream the cylinder. Preferably, the reducing agent is a liquid agent which may be evaporated in the cylinder, such that it may act as a gaseous reductant in an SCR reactor arranged downstream the cylinder.

The temperature within the cylinder during said time interval is too low for combustion of a liquid ammonia but sufficient for evaporation. Hence, a liquid ammonia ejected as described is ready to act as a reducing agent as soon as it has left the cylinder.

The internal combustion engine may comprise an exhaust gas after-treatment system comprising a selective catalytic reduction (SCR) reactor downstream the exhaust port.

When the exhaust valve is opened, excessive pressure in the cylinder pushes the combustion gas into the exhaust path. This flow drags part of the injected first amount of reducing agent. That reducing agent, preferably ammonia, then may act as a NOx reducing agent when reaching an SCR system installed in that path.

The control unit may be adapted for ejecting a second amount of a liquid fuel, preferably including liquid ammonia, into said combustion chamber to cause combustion of said fuel in said combustion chamber when said piston is positioned in a vicinity of said top dead center.

Within this application in the vicinity of the top dead center means within a crank angle range of -15°CA to 35°CA with respect to the top dead center.

Preferably, injection of the second amount starts shortly before (-15°CA to -5°CA) or when the piston reaches the top dead center and lasts for a time interval of up to 50°CA, preferably up to 35°CA.

When the reducing agent is injected, the combustion as already over. Thus, typically selective non catalytic reduction does not occur, since at that time the exhaust gas in the cylinder has cooled down.

Preferably the reducing agent is liquid ammonia, and the liquid fuel also is liquid ammonia.

The liquid fuel may also comprise an alternative fuel such as diesel.

The internal combustion engine may comprise a prechamber. The prechamber in particular has a spark plug and/or a pre-injector.

The liquid fuel may be ejected by the same dosing unit as the reducing agent, in particular if the reducing agent is liquid ammonia and the liquid fuel also is liquid ammonia.

This dosing unit preferably is arranged in the cylinder head. An additional dosing unit for the main fuel may also be arranged in the cylinder liner and/or in the cylinder head.

During the time interval while the piston moves from the bottom dead center to the bottom dead center via the top dead center, first the second amount of liquid fuel, which is the main fuel, is injected and thereafter the first amount of reducing agent is injected. Typically, the quantity of the second amount is larger than the quantity of the first amount, as the second amount is for combustion and the first amount for reduction.

In case, the liquid fuel is different from ammonia, for example the liquid fuel may be diesel, dosing units with appropriate injectors for the respective quantities for the first and second amount may be mounted to the cylinder head and/or cylinder liner.

Preferably, the reducing agent is liquid ammonia, and the liquid fuel is liquid ammonia. The quantity of the second amount may comprise 95-99.9wt% of a total quantity of ammonia ejected per stroke or per combustion cycle.

Within this context "one stroke" refers to the time interval which takes the piston to move in one direction, either from top dead center to bottom dead center (from 0°CA to 180°CA) or from bottom dead center to top dead center ( from 180°CA to 360°CA) cycle of the piston of the respective cylinder from 0°CA to 360°CA (or 0°CA), that is from top dead center to top dead center during one revolution of the crankshaft of the engine.

Within this context "a single cylinder combustion cycle" or "combustion cycle" refers to the time interval which corresponds to the movement of the piston of the respective cylinder from 0°CA to 360°CA (or 0°CA), that is from top dead center to top dead center during one revolution of the crankshaft of the engine. In case the engine comprises more than one cylinder, during the combustion cycle pistons of all cylinders have performed a 360°CA movement, but all start at different crank angles.

Within this context "one engine combustion cycle" refers to the time interval after pistons of all cylinders have performed a combustion cycle.

The internal combustion engine may comprise a fuel supply system comprising at least one dosing unit. The reducing agent and the liquid fuel may be provided by the same fuel supply system, in particular if the fuel supply system is an ammonia supply system.

The fuel supply system may comprise a first dosing unit for small quantities to provide the first amount and a second dosing unit for providing large quantities to provide the second amount.

In case the reducing agent is liquid ammonia and the liquid fuel also is liquid ammonia, the same dosing unit or the same dosing units may be used for ejecting the large quantity of the second amount and the small quantity of the first amount.

The dosing unit may comprise a multistep valve, such that the quantity of the first amount may be chosen smaller than the full capacity of valve. A multistep valve is able to precisely eject a large quantity of the second amount and a small quantity of the first amount, preferably of the same substance.

The dosing unit may comprise an injector valve and a tip design being adapted to inject smaller amounts of fuel ammonia during the ejection of the first amount.

The dosing unit may be adapted to provide a controllable opening time, closing time, injection pressure and/or injection volume.

For instance, a two-step opening valve can be applied in which only one injection hole or only a part of holes is opened during the provision of the first amount. This variant may provide an additional benefit, if the respective opening is directed in the axial or close to the axial direction, in order to avoid impingement of the fuel stream on the lubricated surface of a cylinder liner.

Alternatively, a two-step opening valve may be adapted to inject the first amount at a lower speed than the second amount to avoid impinging of ammonia droplets into the cylinder wall at the expansion stroke, when the combustion gas pressure is substantially lower than at top dead center. Hence, the droplet stream penetration depth of the first injection is smaller than that of the second injection stream.

At a given injection pressure and fixed injector holes geometry smaller momentum may be achieved with changing the injection duration (less mass injected) or by changing the opening and closing dynamics of the injector needle, acting on the jet velocities and droplet atomization mechanism.

The injector for example may allow injection rate shaping. This way the injection timing may be changed based on the actuation profile of the injector.

Small injections having less mass and therefore also less momentum to avoid impingement may be provided by amending the injection volumetric flow.

Additionally or alternatively, the internal combustion engine may comprise a plurality of dosing units for each cylinder and the control unit may be adapted for controlling the dosing units to eject the first amount of reducing agent, such that during a single cylinder combustion cycle only a part of the plurality of dosing units for each cylinder ejects the first amount, whereas preferably all dosing units are used for the second amount.

In particular, the control unit is adapted for controlling the dosing units to eject the first amount of reducing agent according to a time schedule, preferably a rotating schedule, with respect to the plurality of dosing units of a cylinder.

This is done in order to reduce the quantity of the first amount of reducing agent as compared to the quantity of the second amount, in particular, if the same substance is ejected by the same dosing units for both amounts and the respective injector might perform poorly on a small amount of ammonia.

Additionally or alternatively, the internal combustion engine may comprise a plurality of cylinders and the control unit may be adapted for controlling the dosing units, such that during an engine combustion cycle the first amount of reducing agent is ejected only by dosing units of a part of the plurality of cylinders.

In particular, the control unit may be adapted to control the dosing units to eject the first amount of reducing agent according to a time schedule, preferably a rotating schedule, with respect to the plurality of cylinders, such that during one engine combustion cycle only dosing units of a part of the plurality of cylinders eject the first amount, whereas preferably the second amount is injected in all cylinders.

Typically, exhaust of a plurality of cylinders, that is at least two cylinders, is merged in an exhaust gas manifold, where it mixes with the reducing agent, which has been injected to one or to a part of the cylinders. Thus, even when the dosing unit has a poor ability for dosing small quantities of reducing agent, the correct ratio of reducing agent and exhaust may be provided.

The internal combustion engine may comprise a selective catalytic reduction (SCR) reactor downstream the cylinder.

The invention aims at getting rid of the urea dosing unit in the SCR, so generally no conventional urea injector is needed in the SCR. The injection of Ammonia (NH3) inside the cylinder enables a one step NOx reduction instead of a 2 step reduction as in case of Urea (or Ammonia precursor substance). This may hinder the formation of deposits on the catalyser surface and therefore improves the durability of the SCR system.

Moreover, this allows a more efficient catalytic reaction. Concluding, the adoption of Ammonia instead of urea allows better SCR durability and improves SCR conversion efficiency, potentially allowing a reduction of the SCR volume.

An additional dosing unit may be arranged downstream the cylinder for ejecting a reducing agent, such as ammonia or an ammonia precursor substance.

Hence, in case the first amount of reducing agent is not sufficient for the required NOx reduction, an additional amount of reducing agent may be injected downstream the cylinder and upstream of the SCR reactor.

As the main part of the reducing agent is provided within the cylinder a separate reducing agent system can be skipped completely or can be provided as a small device.

If the amount of ammonia as a reducing agent injected with the secondary injection sums up with some unburned ammonia from combustion and the level is higher than the reducing agent required for the engine out NOx emissions there might be the need for the aftertreatment system comprising an additional ammonia slip catalyst (ASR), which neutralizes NH3 into N2.

The ammonia slip reduction (ASR) catalyst may be integrated into the SCR reactor or may be installed downstream of the SCR reactor in order to further reduce ammonia slip.

Proper dosing of reducing agent may be established by controlling duration of actuation of an injection valve of the dosing unit, for example by setting an appropriate dosing interval and/or dosing pressure.

The quantity of the first amount of reducing agent may be determined in a feed-forward control concept on the basis of predetermined NOx emission and ammonia slip characteristics, preferably stored in a table. The control unit may be adapted to select the quantity of the first amount in a feed-forward control concept.

The control unit may be adapted for selecting the quantity of the first amount within a closed loop control.

The feed-back control loop may be based on a NOx content measurements and/or an ammonia slip measurement downstream of the SCR reactor.

The internal combustion engine may comprise a NOx sensor for providing values which correspond to a NOx content in the exhaust gas downstream the cylinder, in particular downstream the SCR reactor, and/or a reducing agent sensor for proving values which correspond to the quantity of reducing agent and/or reductant in the exhaust gas downstream the cylinder, in particular downstream the SCR reactor.

The control unit may be adapted to receive values from the NOx sensor and/or from the reducing agent sensor.

The control unit may be adapted to compare values from the NOx sensor and/or from the reducing agent sensor with predetermined values and may be adapted to control the quantity of the first amount depending on the comparison.

If excessive reducing agent leaves the SCR reactor, the control unit may be adapted to reduce the quantity of the first amount.

If the residual NOx value downstream the SCR reactor is too large the quantity of the first amount may be increased.

Depending on the NOx content, the control unit may be adapted to reduce or to increase the quantity of the first amount, and/or to add a supplementary amount of reducing agent downstream the cylinder and/or to guide the exhaust gas additionally through an ASR catalyst.

The adoption of a reducing agent sensor and/or an ammonia emission sensor, in particular an ammonia sensor, in conjunction with a NOx sensor will enable a closed loop ammonia postinjection control and will help tackling the aspect of a surplus of reducing agent, for example ammonia, downstream the SCR catalyst. This will enable a smaller ASR catalyst if needed at all and the aftertreatment system comprising the SCR reactor is simplified as well.

The control unit may be adapted to amend at least one operating parameter of the internal combustion engine, for example to increase the firing temperature by earlier injection, if the first amount is too large.

In this case "too large" means that more reducing agent is provided than needed for NOx reduction of the exhaust gas. In case, the first amount too large, there is the risk of an ammonia slip and harmful emission.

In practice, the control unit may be adapted to amend at least one operating parameter of the internal combustion engine if the control unit receives respective values from the NOx sensor and/or from the reducing agent sensor.

If there is an ammonia slip, that means, if there is residual ammonia downstream the SCR reactor, for example detected by a reducing agent sensor, the first amount is determined as being too large. The control unit may be adapted to amend at least one operating parameter depending on the amount of residual ammonia downstream the SCR reactor.

Usually operating parameters are determined and stored during a shop test for different conditions.

Ammonia slip can be prevented if the combustion is tuned to produce more NOx, which consumes excess reducing agent.

A method for operating an internal combustion engine having at least one cylinder, having an inner diameter of at least 200mm, comprising a piston, an exhaust valve and a scavenging port, preferably as described above, comprises the following step.

A first amount of a reducing agent, preferably liquid ammonia, is injected into the cylinder during an expansion stroke within a time interval that falls in a time window from when the exhaust valve opens until before supply of a scavenging gas through said scavenging port into the cylinder is started.

A second amount of liquid fuel, in particular including ammonia, may be ejected into the cylinder to cause combustion of said fuel in the cylinder when said piston is positioned in a vicinity of said top dead center.

Preferably, the first amount and the second amount contain liquid ammonia and are ejected by the same dosing unit.

The reducing agent may be liquid ammonia and the liquid fuel may be liquid ammonia, and the second amount may comprise 95-99.9% of a total amount of ammonia per combustion cycle or per engine combustion cycle.

The internal combustion engine may comprise a plurality of dosing units for each cylinder.

During each combustion cycle, only a part of the plurality of dosing units, preferably only one dosing unit, may eject the first amount of reducing agent.

The first amount of reducing agent may be ejected, preferably for each cylinder, according to a time schedule. The first amount may be ejected according to a rotating schedule with respect to the plurality of dosing units of a cylinder.

During a first combustion cycle only a part of the plurality of dosing units, preferably only one dosing unit, for each cylinder ejects the first amount. During a successive combustion cycle a part of the dosing units which is different from the part of dosing units used for the previous combustion cycle ejects the first amount, and so on.

This way, all dosing units are used for ejecting the first amount after some time on a regular basis.

In order to increase the amount of fuel to be supplied by a single injector, one or two injectors out of a plurality of injectors, for example one injector out of two or three injectors installed in each cylinder, might be used for ejecting the first amount of reducing agent injection.

Whereas the second amount is injected by all dosing units for each combustion cycle, the first amount may be injected only by a part of the dosing units.

Alternatively or additionally, the internal combustion engine may comprise a plurality of cylinders.

During one engine combustion cycle the first amount of reducing agent is ejected only by dosing units of a part of the plurality of cylinders, preferably by a dosing unit of only one cylinder.

The first amount of reducing agent is ejected according to a time schedule, preferably a rotating schedule, with respect to the plurality of cylinders.

During a first engine combustion cycle only dosing units of a part of the plurality of cylinders eject the first amount.

During a successive engine combustion cycle dosing units of a part of the cylinders which is different from the part of cylinders used for the previous engine combustion cycle eject the first amount, and so on.

This way, all dosing units of all cylinders are used for ejecting the first amount after some time on a regular basis.

Whereas the second amount is injected in all cylinders for each combustion cycle and each engine combustion cycle, the first amount may be injected only in one or two cylinders.

The injection event of reducing agent may be initiated only in selected cylinders (between 1 and N, where N - total number of cylinders in the engine). As the exhaust gas is mixed in the exhaust gas receiver, this has a minor or no effect on the distribution of the reducing agent in the exhaust gas before entering the SCR reactor.

In order to assure a uniform lifetime consumption of injector parts, flexible, preferably rotating scheduling of dosing units and/or cylinders injectors involved in injection of reducing agent may be applied.

The second amount may be adjusted in the cylinder, which is used for injecting the first amount, in order to compensate for an additional heat release. A portion of a first amount may not be released into the exhaust duct, may stay in the cylinder and may contribute to combustion.

The internal combustion engine may comprise a selective catalytic reduction (SCR) reactor downstream the cylinder and the first amount acts as a reducing agent in the SCR reactor.

Preferably a mixture of non-combusted ammonia fuel and evaporated liquid ammonia injected into the cylinder as a first amount of reducing agent acts as a reducing agent in the SCR reactor.

An additional reducing agent, such as ammonia or an ammonia precursor substance, may be ejected downstream the cylinder and upstream and/or within the SCR reactor.

The quantity of the first amount may be selected within a feed-forward control or within a closed loop control.

At least one engine parameter may be adapted, in particular the firing temperature may be increased, if the first amount is too large.

The amount of reducing agent, in particular ammonia, leaving cylinder may be too large such that it cannot be not completely consumed for NOx reduction in the SCR reactor. Thereby an ammonia slip may be created. The ammonia slip may be measured by a respective sensor, providing a value which corresponds to the quantity of residual ammonia.

A command may be sent to the control unit or the control unit may be adapted to control the dosing units to amend the quantity of the first amount of reducing agent or to adapt the at least one engine parameter, for example the injection timing, in order to increase the firing temperature, such that more NOx is generated. By doing so, the ammonia consumption at the SCR will be also increased. The quantity of the first amount and/or the engine parameter may be adapted until the ammonia slip vanishes.

A computer program may comprise a program code for carrying out the steps of the method as described above when the program is executed on a computer.

A computer program product which can be loaded directly into an internal memory of a digital computer may comprise software code portions executing the method steps as described above when the program is running on the digital computer.

In the following, the invention is further explained in embodiments by means of the following figures:
- Figure 1:: shows a schematic view of an example of an internal combustion engine;
- Figure 2:: schematically shows a time chart;
- Figure 3:: schematically shows a cylinder with a plurality of dosing units.

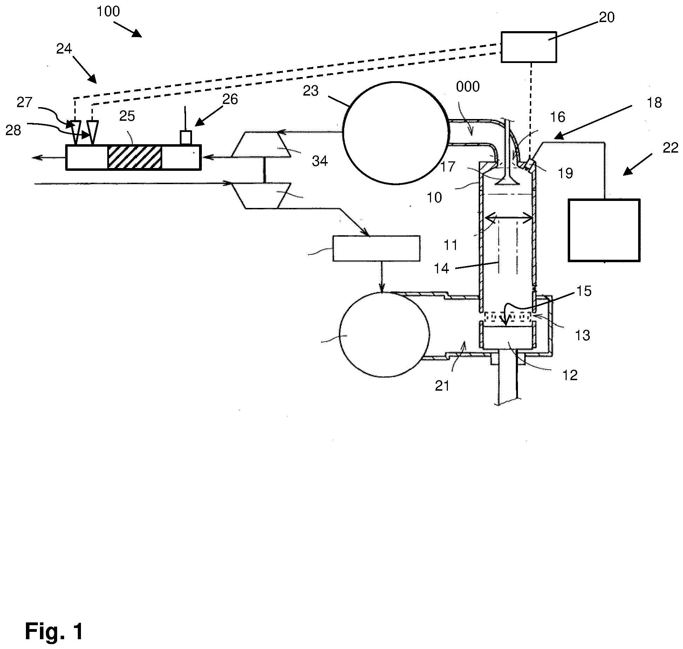

Figure 1 shows a schematic view of an example of an internal combustion engine 100.

The internal combustion engine 100 has a cylinder 10, having an inner diameter 11 of at least 200mm. A piston 12 is provided in said cylinder 10.

The internal combustion engine 100 has a scavenging port 13 formed in said cylinder 10 for supplying scavenging gas from a scavenging chamber 21 into a combustion chamber 14 that is a space enclosed by said cylinder 10 and an upper surface 15 of said piston 12.

The internal combustion engine 100 has an exhaust port 16 formed in said cylinder 10 for exhausting gas out of said combustion chamber 14. The exhaust port 16 comprises an exhaust valve 17.

The internal combustion engine 100 comprises a dosing unit 18, with a dosing valve 19, which is part of a fuel supply system 22.

The fuel supply system 22 provides liquid ammonia.

The internal combustion engine 100 comprises a control unit 20 for controlling the dosing unit 18.

The control unit 20 is adapted for ejecting a second amount of a liquid ammonia as a fuel into said combustion chamber to cause combustion of said fuel in said combustion chamber 14 when the piston 12 is positioned in the vicinity of the top dead center.

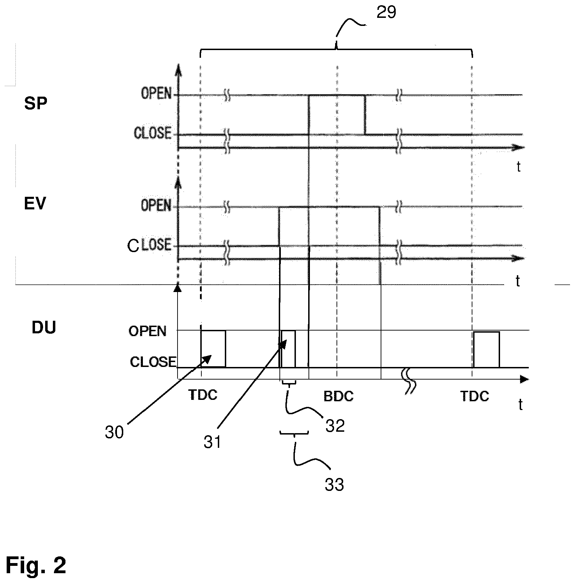

The control unit 20 is further adapted for ejecting a first amount of the liquid ammonia into said combustion chamber 14 during an expansion stroke during a time interval 32 (see figure 2) that falls in a time window 33 (see figure 2) from when the exhaust valve 17 opens until before supply of said scavenging gas through said scavenging port 13 into said combustion chamber 14 is started.

The quantity of the first amount of liquid ammonia is smaller than the quantity of the second amount. The quantity of the second amount comprises 95-99.9% of a total quantity of liquid ammonia ejected per combustion cycle.

The first amount of liquid ammonia is injected into the combustion chamber 14 during a time interval, when the temperature is too small for combustion and high enough for evaporating. Evaporated ammonia is guided out of the cylinder 10 together with the exhaust gas into an exhaust gas receiver 23 and further into an exhaust gas after-treatment system 24 comprising a selective catalytic (SCR) reactor 25 downstream the exhaust gas receiver 23, in this example downstream the turbine 34. Alternatively, the selective catalytic (SCR) reactor 25 may be arranged upstream the turbine 34 (not shown in the figure).

An additional dosing unit 26 is arranged upstream the selective catalytic (SCR) reactor 25 for ejecting a supplemental reducing agent, such as ammonia or an ammonia precursor substance.

The internal combustion engine 100 comprises a NOx sensor 27 and/or an ammonia sensor 28 arranged downstream the (SCR) reactor 25.

The internal combustion engine 100 may comprise an additional raw emissions measurement sensor (not shown int the figure), for example a virtual sensor.

The control unit 20 is adapted to receive signals from the NOx sensor 27 and/or from the ammonia sensor 28 and may set the quantity of the first amount depending on this signal to avoid an ammonia slip.

Figure 2 schematically shows a time chart for a time period of a combustion cycle from the top dead center TDC to the bottom dead center BDC and back to the top dead center TDC.

When the piston 12 (see figure 1) is close to the bottom dead center BDC, the scavenge ports SP 13 (see figure 1) are open, which is shown with the upper timeline.

Before the scavenge ports open, the exhaust valve EV 17 (see figure 1) opens and remains open until the scavenge ports close, which is shown with the middle timeline.

Usually, the time range between exhaust valve opening and exhaust valve closing changes over engine operating load and rating. For example, for ammonia driven engines at low loads the opening range has a duration of ca. 135°CA - 150°CA while at full load the range is slightly larger, up to 155°CA -180°CA.

For Diesel operation at full load the exhaust valve typically is closed at around 280°CA, and at low load at around 250°CA.

The timing of the injection is presented with the lower timeline.

When the piston is close to the top dead center, the dosing unit DU 18 (see figure 1) opens to eject a second amount 30 of liquid ammonia, which is combusted in the combustion chamber 14 (see figure 1).

A first amount 31 of liquid ammonia is ejected during a time interval 32 that falls in a time window 33 from when the exhaust valve EV 17 (see figure 1) opens until before supply of said scavenging gas through said scavenging port SP 13 (see figure 1) into said combustion chamber 14 (see figure 1) is started.

After the exhaust valve EV has opened and before the scavenging ports SP 13 open, the first amount of liquid ammonia, which is only around 2% of the total liquid ammonia injected per combustion cycle, is injected.

As the operation of the engine is a cyclic process, the first amount can be regarded as being injected prior to the second amount and the second amount can be regarded as being injected prior to the first amount.

With respect to a single combustion first the second amount injected, which is the main amount of liquid ammonia and which causes combustion, and afterwards the first amount in injected, which is very small as compared to the second amount and which acts a reducing agent downstream the cylinder.

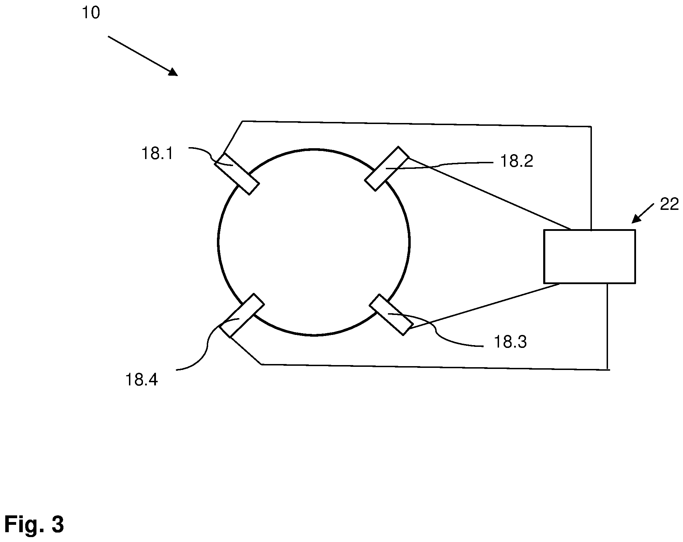

Figure 3 schematically shows a cylinder 10 with four dosing units 18.1, 18.2, 18.3, 18.4 in top view as a further example.

Alternative examples not shown in the figures can comprise either two or three dosing units, and even may involve two or three each per fuel or per injection event of the first or second amount.

Whereas the supply unit 22 provides liquid ammonia for the second amount 30 (see figure 2) by all dosing units 18.1, 18.2, 18.3, 18.4 for the first amount 31 (see figure 2) may be provided only by a part of the dosing units 18.1, 18.2, 18.3, 18.4, for example by one dosing unit only.

The dosing units 18.1, 18.2, 18.3, 18.4 for ejecting the first amount 31 (see figure 2) can be alternated combustion cycle by combustion cycle.

During a first stroke only the first dosing unit 18.1 may be used for dosing the first amount 31 (see figure 2), whereas all dosing unts are used to supply the second amount 30 (see figure 2). During a subsequent second combustion cycle only the second dosing unit 18.2 may be used, during a subsequent third combustion cycle only the third dosing unit 18.3 may be used, during a subsequent fourth combustion cycle only the fourth dosing unit 18.4 may be used. During a subsequent combustion cycle again the first dosing unit 18.1 may be used and so on.

## Claims

1. Internal combustion engine (100) having at least one cylinder (10), having an inner diameter (11) of at least 200mm, with a piston (12) provided in said cylinder (10) for reciprocating between a bottom dead center and a top dead center; the internal combustion engine (100) having a scavenging port (13) arranged in said cylinder (10) for supplying scavenging gas into a combustion chamber (14) that is a space enclosed by said cylinder (10) and an upper surface (15) of said piston (12);
the internal combustion engine (100) having an exhaust port (16) formed in said cylinder (10) for exhausting gas out of said combustion chamber (14), the exhaust port (16) comprising an exhaust valve (17);
wherein the internal combustion engine comprises at least one dosing unit (18, 18.1, 18.2, 18.3, 18.4) for ejecting a reducing agent, preferably liquid ammonia, into said combustion chamber (14), preferably at least one dosing unit (18) for each cylinder (10),
**characterized in that**
the internal combustion engine (100) comprises a control unit (20) for controlling the dosing unit (18, 18.1, 18.2, 18.3, 18.4), adapted for ejecting a first amount (31) of the reducing agent into said combustion chamber (14) during expansion stroke, preferably during a time interval (32) that falls in a time window (33) from when the exhaust valve (17) opens until before supply of said scavenging gas through said scavenging port (13) into said combustion chamber (14) is started.

2. Internal combustion engine according to claim 1, wherein the control unit (20) is adapted for ejecting of a second amount (30) of a liquid fuel, preferably including liquid ammonia, into said combustion chamber (14) to cause combustion of said fuel in said combustion chamber (14) when said piston (12) is positioned in a vicinity of the top dead center.

3. Internal combustion engine according to claim 2, wherein the reducing agent is liquid ammonia and the liquid fuel is liquid ammonia, and wherein the quantity of the second amount comprises 95-99.9% of a total quantity of ammonia ejected per combustion cycle or per engine combustion cylce.

4. Internal combustion engine according to one of the preceding claims, wherein
the dosing unit (18, 18.1, 18.2, 18.3, 18.4) comprises a multistep valve,
and/or
the internal combustion engine comprises a plurality of dosing units (16) for each cylinder (10) and
the control unit (20) is adapted for controlling the dosing units, such that during a combustion cycle (29) the first amount (31) of reducing agent is ejected by only a part of the plurality of dosing units (18.1, 18.2, 18.3, 18.4) for each cylinder (10), in particular according to a time schedule, preferably a rotating schedule, with respect to the plurality of dosing units (18.1, 18.2, 18.3, 18.4) of a cylinder (10),
and/or
wherein
the internal combustion engine (100) comprises a plurality of cylinders (10) and the control unit (20) is adapted for controlling the dosing units, such that during an engine combustion cycle the first amount (31) of reducing agent is ejected only by dosing units (18, 18.1, 18.2, 18.3, 18.4) of a part of the plurality of cylinders (10), in particular according to a time schedule, preferably a rotating schedule, with respect to the plurality of cylinders (10).

5. Internal combustion engine according to one of the preceding claims, wherein the internal combustion engine (100) comprises a selective catalytic reduction (SCR) reactor (25) downstream the cylinder (10) and preferably an additional dosing unit (26) arranged downstream the cylinder (10) for ejecting a reducing agent, such as ammonia or an ammonia precursor substance.

6. Internal combustion engine according to one of the preceding claims, wherein the control unit (20) is adapted for selecting the quantity of the first amount (31) within a closed loop control, wherein preferably the internal combustion comprises a NOx sensor (27) for proving values which correspond to a NOx content in the exhaust gas downstream the cylinder (10) and/or a reducing agent sensor (28) for proving values which correspond to the quantity of reducing agent in the exhaust gas downstream the cylinder (10).

7. Internal combustion engine according to one of the preceding claims, wherein the control unit (20) is adapted to amend at least one engine parameter, in particular to increase the firing temperature, if the first amount (31) is too large.

8. Method for operating an internal combustion engine (100) having at least one cylinder (10), having an inner diameter (11) of at least 200mm, comprising a piston (12), an exhaust valve (17) and a scavenging port (13), preferably according to one of the preceding claims,
wherein
a first amount (31) of reducing agent, preferably liquid ammonia, is injected into the cylinder (10) during expansion stroke, preferably within a time interval (32) that falls in a time window (33) from when the exhaust valve (16) opens until before supply of a scavenging gas through said scavenging port (13) into the cylinder is started.

9. Method according to claim 8, wherein a second amount (30) of liquid fuel, in particular including ammonia, is injected into the cylinder (10) to cause combustion of said fuel in the cylinder (10) when said piston (12) is positioned in a vicinity of said top dead center.

10. Method according to claim 9, wherein the reducing agent is liquid ammonia and the liquid fuel is liquid ammonia, and the second amount comprises 95-99.9% of a total amount of ammonia per combustion cycle or per engine combustion cycle.

11. Method according to at least one of claims 8 to 10,
wherein the internal combustion engine (100) comprises a plurality of dosing units (18.1, 18.2, 18.3, 18.4) for each cylinder (10) and during one combustion cycle, preferably for each cylinder, only a part of the plurality of dosing units (18.1, 18.2, 18.3, 18.4) ejects the first amount (31) of reducing agent, in particular according to a time schedule, preferably a rotating schedule, with respect to the plurality of dosing units (18.1, 18.2, 18.3, 18.4) of each cylinder (10),
and /or
wherein
the internal combustion engine comprises a plurality of cylinders (10) and during one engine combustion cycle only dosing units (18, 18.1, 18.2, 18.3, 18.4) of a part of the plurality of cylinders (10) eject the first amount (31), in particular according to a time schedule, preferably a rotating schedule, with respect to the plurality of cylinders (10) .

12. Method according to at least one of claims 8 to 11, wherein the internal combustion engine (100) comprises a selective catalytic reduction (SCR) reactor (25) downstream the cylinder (10) and at least a part of the first amount (31) acts as a reducing agent in the SCR reactor,
and wherein preferably an additional reducing agent, such as ammonia or an ammonia precursor substance, is ejected downstream the cylinder (10) and upstream and/or within the SCR reactor (25).

13. Method according to at least one of claims 8 to 12, wherein the quantity of the first amount (31) is selected within a closed loop control.

14. Method according to at least one of claims 8 to 13, wherein at least one engine parameter is adapted, in particular the firing temperature is increased, if the first amount (31) is too large.

15. A computer program comprising program code for carrying out the steps of the method according to any one of the claims 8 to 14 when the program is executed on a computer.

16. A computer program product which can be loaded directly into an internal memory of a digital computer and which comprises software code portions executing the method steps of at least one of the claims 8 to 14 when the program is running on the digital computer.
